# EUROPEAN PATENT SPECIFICATION

(11) **EP 2 931 569 B1**
(45) Date of publication and mention of the grant of the patent: **30.11.2016**
(21) Application number: 13805496.0
(22) Date of filing: 10.12.2013
(51) Int. Cl.: B60T 7/20, B60T 15/22, B60T 13/26, B60T 17/22

(54) **A TRAILER CONTROL SYSTEM**
ANHÄNGERSTEUERUNGSSYSTEM
SYSTÈME DE COMMANDE DE REMORQUE

(30) Priority: 14.12.2012 GB 201222549
(43) Date of publication of application: 21.10.2015
(73) Proprietor: Haldex Brake Products Limited, Lindley, Warwickshire CV13 6DE (GB)
(72) Inventor: HARRISON, Dudley, John, Solihull West Midlands B90 4YP (GB); MELLINGS, Carl, Robert, Redditch West Midlands B98 7NR (GB)
(74) Representative: Lawson, Alison Christina
(86) International application number: PCT/GB2013/053251
(87) International publication number: WO 2014/091223

(56) References cited:
- EP-A2- 2 193 965
- WO-A1-2005/115811
- WO-A1-2006/133535
- WO-A1-2012/125726
- WO-A2-2006/089284
- WO-A2-2009/046512
- DE-A1- 2 626 134
- DE-A1- 2 720 632
- GB-A- 2 472 461
- US-A1- 2005 062 344

## Description

This invention relates to a trailer control system, and in particular concerns an arrangement for sensing and controlling activity relating to the brakes of a trailer.

It is known for trailers to be transported, for instance by ferry, unaccompanied by a towing vehicle or driver. For instance, a trailer may be parked at the dock by a tractor, and the trailer is then moved onto, and off, the ferry by a dedicated shunting tractor.

In many cases, the operator of the shunting tractor may only connect the air supply line of the shunting tractor to the trailer, to release the automatic emergency brake. However, doing this may not release all of the brakes that are applied to the wheels of the trailer. Therefore, when the shunting tractor begins to tow the trailer, the trailer maybe dragged without the wheels rotating, leading to "flat spotting" of the trailer's tyres.

It is an object of the present invention to provide a trailer control system which seeks to alleviate this difficulty.

EP 2193965 discloses a pneumatic brake system with a manually operable parking valve located on a trailer having a first operating state wherein a spring brake of the trailer is activated, and a second operating state wherein the spring brake is deactivated. The system also includes a sensor which can determine the operating state of the spring brake, or parking valve, and a transfer device for transferring information concerning the state of the parking brake to a tractor.

WO 2006/133535 and US 2005/062344 both disclose vehicle braking systems for a tractor and trailer combination in which a pressure sensor is provided to detect the connection of the trailer to a pressurised fluid supply. If, by virtue of the sensor, the system determines that the trailer is not coupled to a tractor, it acts to prevent the release of the spring brake, thus immobilising the trailer.

WO 2006/089284 discloses a tracking system for trailers or semi-trailers in which means are provided remotely to lock the trailer brakes to prevent unauthorised movement of the trailer.

Accordingly, one aspect of the present invention provides a trailer control system for a trailer comprising: an electronic braking system (EBS); an electrical connection, by which electrical power may be provided to the trailer from an external source; and a fluid connection, through which pressurised fluid may be supplied to the trailer from an external source, the control system comprising a fluid sensor, positioned to sense the introduction of pressurised fluid into the fluid connection, and wherein, if the fluid sensor senses the supply of pressurised fluid into the fluid connection when no external power source is connected to the electrical connection, power is provided to the EBS from an on-board power source to activate the EBS.

Advantageously, when the EBS is activated, the EBS stores information in a memory.

Preferably, the trailer further comprises a communication system and when the EBS is activated, the EBS transmits information to a remote location via the communication system.

Conveniently, the information comprises one or more of: the time; the location of the trailer; information obtained from one or more brakes of the trailer; information from a suspension system of the trailer; information from one or more wheel rotation sensors of the trailer; information from one or more cameras provided on the trailer; and information from one or more accelerometers of the trailer.

Advantageously, the trailer comprises at least one parking brake and parking valve positioned selectively to allow, in an unlocked position, or prevent, in a locked position, the release of the parking brake by pressurised fluid introduced into the fluid connection and if the EBS is activated and the parking valve is in the locked position, the EBS causes the parking valve to be moved to the unlocked position.

Preferably, the parking valve is moved to the unlocked position only if movement or attempted movement of the trailer is detected.

Conveniently, the fluid sensor is provided between the fluid connection and the parking valve.

Advantageously, the parking valve may be moved to the unlocked position by a solenoid controlled by the EBS.

Preferably, the trailer has a manual control to allow the parking valve to be locked and unlocked, and wherein the parking valve may be moved to the unlocked position by the EBS even if the manual control is in the locked position.

Conveniently, the trailer may be placed in a mode in which the parking valve may be unlocked by the EBS, and wherein if the trailer is not in the mode then the parking valve will not be unlocked by the EBS.

Advantageously, the mode may be manually activated by an operator of the trailer.

Preferably, the mode may be activated in dependence upon information derived from a positioning system of the trailer.

Preferably, one or more locations are stored in a memory that is accessible by the EBS and, if it is determined that the trailer is in one of the one or more locations, or within a pre-set distance of one of the one or more locations, the mode is activated.

Another aspect of the present invention provides a trailer comprising a control system according to any of the above.

In order that the invention may be more readily understood embodiments thereof will now be described, by way of example, with reference to the accompanying drawing, which shows a trailer incorporating a control system embodying the invention.

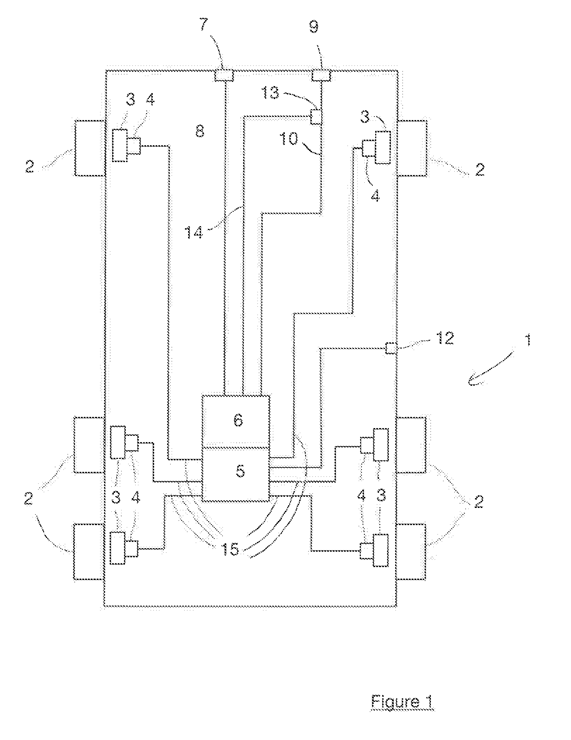

Referring firstly to Figure 1, a trailer 1 is shown, equipped with a control system embodying the present invention.

The trailer has a number of wheels 2, each of which is provided with a brake 3 which is operated by an actuator 4. A modulator 5 is connected to the actuators 4 by respective pressurised fluid connections 15.

An ECU 6 is also provided, and together the modulator 5 and ECU 6 make up the trailer's electronic braking system (EBS).

An electrical connection 7 is provided at the front end of the trailer, and this is adapted for connection to a towing tractor (not shown). A connecting cable 8 connects the electrical connector 7 to the ECU 6, and the connecting cable 8 comprises a power cable as well as a data connection, which may be a CAN bus.

A fluid connection 9 is also provided at the front end of the trailer 1, and this connection 9 is adapted to be attached to the air supply of a towing tractor. A fluid line 10 connects the fluid connection 9 to the trailer's EBS.

The trailer 1 is provided with two distinct kinds of braking control.

Firstly, the regular brakes 3 (service brakes) that are associated with each wheel may be activated by diverting pressurised fluid to the brakes, thereby increasing the pressure in a brake chamber and exerting a braking force via a disc that slows the rotation of the wheel.

Secondly, one or more wheels of the trailer may have a parking brake, comprising a disc or drum brake arrangement which is held in the "locked" position by the force of a spring. Pressurised fluid must be introduced into the parking brake to overcome the spring pressure and unlock the wheel.

In addition, a manual parking brake is provided, comprising a parking valve which (in the depicted embodiment) forms part of the modulator 5. The parking valve may be operated by a manual brake control 12, which is provided at a convenient location on an exterior of the trailer 1. In an "unlocked" position the parking valve allows fluid from the fluid supply line 10 to enter the spring brake chambers (possibly by way of a separate port of the EBS), thus releasing the spring brakes. In a "locked" position the parking valve exhausts the spring brakes, causing the spring brakes to remain on and hence parking the trailer 1. In this example when the parking valve is open it is in the locked position, and when the parking valve is closed it is in the unlocked position. When the trailer 1 is parked an operator may set the manual brake control 12 to the "locked" position, so that even if a source of pressurised fluid is attached to the fluid connection 9, the parking valve will prevent the pressurised fluid from unlocking the parking brake.

As discussed above, when the operator of a shunting tractor moves the trailer 1, the air supply of the shunting tractor may be attached to the fluid connection 9 at the front of the trailer 1. This is intended to release the parking brake on the trailer 1, allowing the wheels 2 of the trailer 1 to turn as the trailer 1 is towed.

However, the operator of the shunting tractor may neglect to operate the manual brake control 12 to unlock the parking valve. In this case, connecting the air supply of the shunting tractor to the fluid connection 9 of the trailer 1 will not cause the parking brake to be unlocked. If the shunting tractor then moves the trailer 1, the wheels 2 will be dragged without rotating, causing wear and damage to the tyres of the wheels 2. Even if the operator of the shunting tractor does release the manual parking brake, the shunting tractor may begin to tow the trailer 1 before enough time has been allowed for the air supply of the shunting tractor to charge the parking brake on the trailer 1 sufficiently for the trailer's wheels 2 to be unlocked. In this case, the wheels 2 will be dragged without turning until the parking brake is released and the wheels 2 begin to turn, again causing wear and damage.

In the embodiment shown in Figure 1, a fluid sensor 13 is provided, associated with the fluid supply line 10. The fluid sensor 13 is adapted to sense when pressurised fluid is introduced into the fluid supply line 10. It will be appreciated that this sensor could be integrated into, or associated with, the modulator 5, and indeed may be positioned anywhere where the connection of a source of pressurised fluid connection 9 may be sensed.

If the air supply of a shunting tractor is attached to the fluid connection 9, this will be sensed by the fluid sensor 13 and a signal can be passed via a sensor connection 14 to the trailer's EBS.

In embodiments of the invention, if the EBS is not attached to an external supply of electrical power but a signal is received from the fluid sensor 13, the EBS is activated.

The EBS may then make a determination as to whether the trailer 1 is being moved without the wheels 2 turning. Movement of the trailer 1 may be determined using on-board accelerometers, through variations in the suspension pressure (as detected by sensors associated with bellows (not shown) of the suspension), or from a positioning system such as a GPS system, which may be incorporated as part of a telematics unit (not shown) of the trailer 1. If movement is detected, but wheel rotation sensors indicate that the wheels 2 are not rotating, the EBS can make a determination that the trailer 1 is being moved without the wheels 2 turning.

In embodiments of the invention if the EBS determines that the trailer 1 is moved without the wheels 2 turning, the EBS may gather and store certain data relating to the incident. For instance, the location (as derived from a positioning system), time and date of the incident may be recorded. Information from sensors, such as pressure sensors associated with the bellows of the brakes 3, accelerometers or wheel rotation sensors, may also be recorded. If the trailer 1 is equipped with cameras, the cameras may be activated and image data gathered by the cameras may also be recorded, to assist in determining which party is responsible for the movement of the trailer 1. The information may be stored in a memory of the EBS for later retrieval, or may be transmitted to a remote control centre via a telematics system.

Even if damage to the tyres of the trailer 1 is not prevented, the recording of this information may enable recovery of costs from the ferry operator, or other party responsible for the shunting tractor, and/or alert the owner of the trailer 1 that maintenance/repairs are needed.

Alternatively, or in addition, the EBS may temporarily release the parking valve (if the parking valve is in the "locked" position) on sensing that pressurised air has been introduced into the fluid connection 9. This may be achieved, for instance, through activation of a solenoid (not shown) of the parking valve that is controlled by the ECU 6.

In some embodiments the EBS may wait until movement of the trailer 1 is detected before releasing the parking valve, although it is noted that this has the potential disadvantage that in order for movement to be detected the trailer 1 must be dragged with the wheels 2 locked, and the tyres are therefore likely to suffer some damage.

In further embodiments of the invention the parking valve will only be closed in response to a signal from the fluid sensor 13 if the trailer 1 is in a "ferry mode". This may, for instance, be set by an operator of the trailer 1 upon leaving the trailer 1 at a ferry port. Alternatively, the EBS may determine that the trailer 1 is at a ferry port, for instance by comparing the location of the trailer 1 (as determined by a GPS or other positioning system) against information regarding the location of ferry terminals. This information may be stored in a memory of the EBS, or transmitted to the trailer 1 via a telematics system. If the trailer 1 is not in the ferry mode then the parking valve will remain in the "locked" position, thus helping to prevent theft of the trailer 1.

It will be understood that, if an electrical connection is not attached from the shunting tractor to the electrical connection 7 of the trailer 1, in order for the EBS of the trailer 1 to be activated, an on-board power system will be required.

The EBS may, for this purpose, be provided with a battery to allow the EBS to be powered. The battery may be a rechargeable battery which is charged (directly or indirectly) through the connecting cable 8 when the trailer 1 is connected to a towing tractor.

Alternatively, a battery of another component may be used to power the EBS. For instance, a telematics system of the trailer 1 may be provided with a rechargeable battery which is charged when the trailer 1 is connected to a towing tractor or other external source of electrical power. When the trailer 1 is disconnected from an external power supply, the flow of power is reversed and the EBS may be powered by the battery of the telematics system.

If the fluid sensor 13 senses that pressurised fluid is no longer being introduced into the fluid supply 10, the EBS is deactivated, and the parking valve is opened (if it had been closed).

It will be understood that the invention provides a practical system for detecting and/or preventing damage to the tyres of a trailer, that requires minimum modification of the components of an existing trailer.

When used in this specification and claims, the terms "comprises" and "comprising" and variations thereof mean that the specified features, steps or integers are included. The terms are not to be interpreted to exclude the presence of other features, steps or components.

## Claims

1. A trailer control system for a trailer comprising:
an electronic braking system (EBS) (5, 6);
an electrical connection (7), by which electrical power may be provided to the trailer from an external source; and
a fluid connection (9), through which pressurised fluid may be supplied to the trailer from an external source,
the control system comprising a fluid sensor (13), positioned to sense the introduction of pressurised fluid into the fluid connection (9), and **characterised in that** if the fluid sensor (13) senses the supply of pressurised fluid into the fluid connection (9) when no external power source is connected to the electrical connection (7), power is provided to the EBS (5, 6) from an on-board power source to activate the EBS.

2. A control system according to claim 1 wherein, when the EBS (5, 6) is activated, the EBS (5, 6) stores information in a memory.

3. A control system according to claim 1 or 2, wherein the trailer further comprises a communication system and wherein, when the EBS (5, 6) is activated, the EBS (5, 6) transmits information to a remote location via the communication system.

4. A control system according to claim 2 or 3 wherein the information comprises one or more of:
the time;
the location of the trailer;
information obtained from one or more brakes (3) of the trailer;
information from a suspension system of the trailer;
information from one or more wheel rotation sensors of the trailer;
information from one or more cameras provided on the trailer; and
information from one or more accelerometers of the trailer.

5. A control system according to claim 1, wherein the trailer comprises at least one parking brake and parking valve positioned selectively to allow, in an unlocked position, or prevent, in a locked position, the release of the parking brake by pressurised fluid introduced into the fluid connection and wherein, if the EBS (5, 6) is activated and the parking valve is in the locked position, the EBS (5, 6) causes the parking valve to be moved to the unlocked position.

6. A control system according to claim 5 wherein the parking valve is moved to the unlocked position only if movement or attempted movement of the trailer is detected.

7. A control system according to claim 5 or 6, wherein the fluid sensor (13) is provided between the fluid connection and the parking valve.

8. A control system according to one of claims 5 to 7, wherein the parking valve may be moved to the unlocked position by a solenoid controlled by the EBS (5, 6).

9. A control system according to one of claims 5 to 8, wherein the trailer has a manual control to allow the parking valve to be locked and unlocked, and wherein the parking valve may be moved to the unlocked position by the EBS (5, 6) even if the manual control is in the locked position.

10. A control system according to one of claims 5 to 9 wherein the trailer may be placed in a mode in which the parking valve may be unlocked by the EBS, and wherein if the trailer is not in the mode then the parking valve will not be unlocked by the EBS.

11. A control system according to claim 10 wherein the mode may be manually activated by an operator of the trailer.

12. A control system according to claim 10 or 11 wherein the mode may be activated in dependence upon information derived from a positioning system of the trailer.

13. A control system according to claim 12 wherein one or more locations are stored in a memory that is accessible by the EBS (5, 6) and, if it is determined that the trailer is in one of the one or more locations, or within a pre-set distance of one of the one or more locations, the mode is activated.

14. A trailer comprising a control system according to any preceding claim.

## Patentansprüche

1. Anhängersteuerungssystem für einen Anhänger, umfassend:
ein elektronisches Bremssystem (EBS) (5, 6);
eine elektrische Verbindung (7), durch die elektrische Energie dem Anhänger aus einer externen Quelle bereitgestellt werden kann; und
eine Fluidverbindung (9), durch die Druckfluid dem Anhänger aus einer externen Quelle zugeführt werden kann,
das Steuerungssystem umfassend einen Fluidsensor (13), der positioniert ist, um die Einbringung von Druckfluid in die Fluidverbindung (9) zu erfassen, und **dadurch gekennzeichnet, dass**, wenn der Fluidsensor (13) die Zufuhr von Druckfluid in die Fluidverbindung (9) erfasst, wenn keine externe Energiequelle an die elektrische Verbindung (7) angeschlossen ist, dem EBS (5, 6) Energie aus einer Energiequelle an Bord bereitgestellt wird, um das EBS zu aktivieren.

2. Steuerungssystem nach Anspruch 1 worin, wenn das EBS (5, 6) aktiviert ist, das EBS (5, 6) Informationen in einem Speicher speichert.

3. Steuerungssystem nach Anspruch 1 oder 2, worin der Anhänger ferner ein Kommunikationssystem umfasst und worin, wenn das EBS (5, 6) aktiviert ist, das EBS (5, 6) Informationen an einen entfernten Ort über das Kommunikationssystem überträgt.

4. Steuerungssystem nach Anspruch 2 oder 3, worin die Informationen eine oder mehrere der folgenden umfassen:
die Zeit;
die Position des Anhängers;
aus einer oder mehreren Bremsen (3) des Anhängers erhaltene Informationen;
Informationen aus einem Aufhängungssystem des Anhängers;
Informationen aus einem oder mehreren Raddrehungssensoren des Anhängers;
Informationen aus einer oder mehreren am Anhänger bereitgestellten Kameras;
und
Informationen aus einem oder mehreren Beschleunigungsmessern des Anhängers.

5. Steuerungssystem nach Anspruch 1, worin der Anhänger mindestens eine Parkbremse und ein Parkventil umfasst, die selektiv positioniert sind, um in einer entriegelten Position zuzulassen oder in einer verriegelten Position zu verhindern, dass die Parkbremse gelöst wird, indem Druckfluid in die Fluidverbindung eingebracht wird und worin, wenn das EBS (5, 6) aktiviert ist und sich das Parkventil in der verriegelten Position befindet, das EBS (5, 6) bewirkt, dass das Parkventil in die entriegelte Position bewegt wird.

6. Steuerungssystem nach Anspruch 5, worin das Parkventil nur dann in die entriegelte Position bewegt wird, wenn Bewegung oder versuchte Bewegung des Anhängers festgestellt wird.

7. Steuerungssystem nach Anspruch 5 oder 6, worin der Fluidsensor (13) zwischen der Fluidverbindung und dem Parkventil bereitgestellt ist.

8. Steuerungssystem nach einem der Ansprüche 5 bis 7, worin das Parkventil durch ein vom EBS (5, 6) gesteuertes Solenoid in die entriegelte Position bewegt werden kann.

9. Steuerungssystem nach einem der Ansprüche 5 bis 8, worin der Anhänger ein manuelles Bedienelement aufweist, um das Ver- und Entriegeln des Parkventils zu erlauben, und worin das Parkventil vom EBS (5, 6) in die entriegelte Position bewegt werden kann, selbst wenn sich das manuelle Bedienelement in der verriegelten Position befindet.

10. Steuerungssystem nach einem der Ansprüche 5 bis 9, worin der Anhänger in eine Betriebsart versetzt werden kann, in der das Parkventil vom EBS entriegelt werden kann und worin, wenn sich der Anhänger nicht in der Betriebsart befindet, das Parkventil nicht vom EBS entriegelt wird.

11. Steuerungssystem nach Anspruch 10, worin die Betriebsart von einem Bediener des Anhängers manuell aktiviert werden kann.

12. Steuerungssystem nach Anspruch 10 oder 11, worin die Betriebsart abhängig von Informationen, die einem Positionierungssystem des Anhängers entstammen, aktiviert werden kann.

13. Steuerungssystem nach Anspruch 12, worin eine oder mehrere Positionen in einem Speicher gespeichert sind, auf den vom EBS (5, 6) zugegriffen werden kann, und, wenn bestimmt wird, dass sich der Anhänger in einer der einen oder mehreren Positionen oder innerhalb einer vorgewählten Entfernung von einer der einen oder mehreren Positionen befindet, die Betriebsart aktiviert wird.

14. Anhänger umfassend ein Steuerungssystem nach einem vorhergehenden Anspruch.

## Revendications

1. Système de contrôle de remorque pour une remorque, comprenant :
un système électronique de freinage (EBS) (5, 6) ;
une connexion électrique (7) permettant d'alimenter la remorque en électricité à partir d'une source externe ; et
une connexion fluidique (9) permettant d'alimenter la remorque en fluide pressurisé à partir d'une source externe ;
le système de contrôle comprenant un capteur de fluide (13), positionné de manière à détecter l'introduction de fluide pressurisé dans la connexion fluidique (9), et **caractérisé en ce que** si le capteur de fluide (13) détecte l'alimentation en fluide pressurisé dans la connexion fluidique (9) lorsque aucune source électrique externe n'est connectée à la connexion électrique (7), un courant est fourni à l' EBS (5, 6) par une source électrique embarquée afin d'activer l'EBS.

2. Système de contrôle selon la revendication 1, dans lequel, quand l'EBS (5, 6) est activé, l'EBS (5, 6) stocke une information dans une mémoire.

3. Système de contrôle selon la revendication 1 ou 2, dans lequel la remorque comprend en outre un système de communication, et dans lequel, quand l'EBS (5, 6) est activé, l'EBS (5, 6) transmet une information à un emplacement distant par l'intermédiaire du système de communication.

4. Système de contrôle selon la revendication 2 ou 3, dans lequel l'information consiste en :
le temps ;
l'emplacement de la remorque ;
une information obtenue d'un ou plusieurs freins (3) de la remorque ; une information d'un système de suspension de la remorque ;
une information d'un ou plusieurs capteurs de rotation des roues de la remorque ;
une information d'une ou plusieurs caméras situées sur la remorque ; et/ou une information d'un ou plusieurs accéléromètres de la remorque.

5. Système de contrôle selon la revendication 1, dans lequel la remorque comprend au moins un frein de stationnement et une vanne de stationnement positionnée de manière sélective pour permettre, dans une position déverrouillée, ou empêcher, dans une position verrouillée, le desserrage du frein de stationnement par un fluide pressurisé introduit dans la connexion fluidique, et dans lequel, si l'EBS (5, 6) est activé et la vanne de stationnement est dans la position verrouillée, l'EBS (5, 6) provoque le déplacement de la vanne de stationnement dans la position déverrouillée.

6. Système de contrôle selon la revendication 5, dans lequel la vanne de stationnement est déplacée dans la position déverrouillée uniquement si un déplacement ou une tentative de déplacement de la remorque est détecté.

7. Système de contrôle selon la revendication 5 ou 6, dans lequel le capteur de fluide (13) est situé entre la connexion fluidique et la vanne de stationnement.

8. Système de contrôle selon l'une quelconque des revendications 5 à 7, dans lequel la vanne de stationnement peut être déplacée dans la position déverrouillée par une électrovanne contrôlée par l'EBS (5, 6).

9. Système de contrôle selon l'une quelconque des revendications 5 à 8, dans lequel la remorque comprend un contrôle manuel pour permettre le verrouillage et le déverrouillage de la vanne de stationnement, et dans lequel la vanne de stationnement peut être déplacée dans la position déverrouillée par l'EBS (5, 6) même si le contrôle manuel est dans la position verrouillée.

10. Système de contrôle selon l'une quelconque des revendications 5 à 9, dans lequel la remorque peut être placée dans un mode dans lequel la vanne de stationnement peut être déverrouillée par l'EBS, et dans lequel si la remorque n'est pas dans le mode, la vanne de stationnement ne peut pas être déverrouillée par l'EBS.

11. Système de contrôle selon la revendication 10, dans lequel le mode peut être activé manuellement par un opérateur de la remorque.

12. Système de contrôle selon la revendication 10 ou 11, dans lequel le mode peut être activé en fonction d'une information obtenue d'un système de positionnement de la remorque.

13. Système de contrôle selon la revendication 12, dans lequel un ou plusieurs emplacements sont stockés dans un mémoire accessible par l'EBS (5, 6) et, s'il est déterminé que la remorque se trouve à un emplacement parmi le ou les emplacements, ou dans un rayon prédéterminé d'un emplacement parmi le ou les emplacements, le mode est activé.

14. Remorque comprenant un système de contrôle selon l'une quelconque des revendications précédentes.
